# FASCICULE DE BREVET EUROPEEN

(11) **EP 1 422 116 B1**
(45) Date de publication et mention de la délivrance du brevet: **23.04.2008**
(21) Numéro de dépôt: 03026212.5
(22) Date de dépôt: 14.11.2003
(51) Int. Cl.: B60T 13/565

(54) **Servomoteur pneumatique d'assistance de freinage d'un véhicle muni d'un dispositif de guidage et procédé de montage sur un maître cylindre**
Pneumatischer Bremskraftverstärker eines Fahrzeuges mit einem Führungselement und Verfahren zu dessen Anbau an einen Hauptbremszylinder
Pneumatic brake booster for a vehicle with a guiding device and method for mounting said booster on a master cylinder

(30) Priorité: 22.11.2002 FR 0214784
(43) Date de publication de la demande: 26.05.2004
(73) Titulaire: ROBERT BOSCH GMBH, 70442 Stuttgart (DE)
(72) Inventeur: Brunet, Franck, 93500 Pantin (FR); Quelleu, Thierry, 92600 Asnieres sur Seine (FR); Gaschet, Nicolas, 78380 Bougival (FR)
(74) Mandataire: Hurwic, Aleksander Wiktor

(56) Documents cités:
- US-A- 4 450 688
- US-A- 5 272 958
- US-A- 5 570 622
- US-A- 5 716 110

## Description

La présente invention concerne un servomoteur pneumatique d'assistance de freinage d'un véhicule muni d'un dispositif de guidage et le procédé de montage d'un tel servomoteur sur un maître cylindre, selon l'invention. L'invention a pour but de diminuer une usure précoce d'un tel servomoteur monté sur le maître cylindre à l'intérieur d'un compartiment moteur du véhicule. L'invention concerne plus particulièrement le domaine de l'automobile mais peut également s'appliquer dans d'autres domaines.

Un servomoteur pneumatique d'assistance de freinage d'un véhicule est situé habituellement entre une pédale de frein du véhicule et un maître cylindre. Le servomoteur d'assistance pneumatique de freinage permet de transformer un appui d'un pied d'un conducteur sur une pédale de frein en une pression amplifiée pneumatiquement. Cette pression amplifiée pneumatiquement est destinée à freiner le véhicule. De ce fait, le servomoteur permet de soulager notablement un effort fourni par le conducteur lorsqu'il appuie sur la pédale de frein.

Il existe plusieurs types de servomoteurs pneumatiques d'assistance de freinage. Notamment, il existe des servomoteurs pneumatiques d'assistance de freinage simple. Ces servomoteurs pneumatiques d'assistance de freinage simple comportent essentiellement depuis une pédale de frein jusqu'à au moins une roue du véhicule, une chambre arrière et une chambre avant. Le document US 5 716110 A montre un servomoteur d'après le préambule de la revendication 1. Mais il existe également des servomoteurs pneumatiques d'assistance de freinage tandem comportant dans leur principe une première chambre avant et une première chambre arrière montées en série avec une deuxième chambre avant et une deuxième chambre arrière. La première chambre avant et la deuxième chambre avant sont positionnées par rapport à la première chambre arrière et à la deuxième chambre arrière respectivement de telle manière que la première chambre avant et la deuxième chambre avant sont proche du maître cylindre alors que la première chambre arrière et la deuxième chambre arrière sont éloignées du maître cylindre.

Dans le cas des servomoteurs pneumatique d'assistance de freinage tandem, chacune des chambres avant comporte un volume variable et est séparée de chacune des chambres arrière également à volume variable par une cloison formée par une membrane étanche et souple et par une plaque jupe rigide. La jupe rigide entraîne un piston pneumatique prenant appui, par l'intermédiaire d'une tige de poussée, sur un piston primaire d'un maître cylindre d'un circuit hydraulique de freinage, typiquement un maître cylindre tandem. Chacune des chambres avant est reliée pneumatiquement à une source de vide. Chacune des chambres arrière, est reliée pneumatiquement, de manière contrôlée par une valve d'admission de fluide, à une source de fluide propulseur, typiquement de l'air sous pression atmosphérique.

Au moins un ressort de rappel peut être disposé à l'intérieur de la deuxième chambre avant du servomoteur pour faciliter un retour en position initiale de repos du piston pneumatique et donc pour faciliter un retour en position initiale de repos de la pédale de frein. Pour ce faire, ce ressort de rappel est légèrement préalablement comprimé au repos entre le piston pneumatique et une paroi délimitant la deuxième chambre avant du servomoteur du servomoteur. Plus particulièrement, le ressort de rappel est en appui contre une extrémité du piston pneumatique destiné à être proche du maître cylindre et contre un endroit de la paroi de la deuxième chambre avant du servomoteur à partir duquel s'insère le maître cylindre selon un axe du servomoteur. Le ressort de rappel peut également être disposé entre le piston pneumatique et une expansion cylindrique du maître cylindre. L'expansion cylindrique du maître cylindre est une extrémité du maître cylindre par l'intermédiaire. de laquelle est destiné à s'insérer le maître cylindre dans la deuxième chambre avant du servomoteur selon l'axe du servomoteur.

Lorsque le conducteur appuie sur la pédale de frein, la tige de commande de frein s'enfonce à l'intérieur du servomoteur entraînant l'enfoncement en direction du maître cylindre de la tige de poussée puis du piston pneumatique. L'enfoncement du piston pneumatique en direction du maître cylindre comprime alors davantage le ressort de rappel. Lorsque le conducteur relâche la pédale de frein, le ressort de rappel a tendance à repousser rapidement le piston pneumatique longitudinalement par rapport à l'axe du servomoteur et en direction de la pédale de frein. Ce retour rapide du piston pneumatique en direction de la pédale de frein favorise un pompage du fluide dans chacune des chambres arrière en plus grande quantité et plus efficacement pour un freinage suivant.

Au cours des déplacements longitudinaux successifs de la tige de poussée et du piston pneumatique en direction de la roue du véhicule et en direction de la pédale de frein lors d'un freinage et d'un défreinage (ou relâchement de la pédale de frein) respectivement, un diamètre de la tige de poussée peut être amené à se rétrécir. Ce rétrécissement peut être à l'origine de l'apparition d'une fuite de liquide hydraulique provenant du maître cylindre et/ou d'une fuite pneumatique provenant du servomoteur. Chacune de ces fuites peut alors être à l'origine d'une diminution de l'efficacité de l'amplification de freinage. De plus, ce rétrécissement peut conduire la tige de poussée à buter contre l'expansion cylindrique du maître cylindre au lieu de s'y insérer et d'y coulisser. Ce rétrécissement peut être alors à l'origine d'une éventuelle rupture de la tige de poussée lors d'un freinage brusque du véhicule ce qui n'est pas admissible pour assurer une sécurité du conducteur.

On s'est aperçu que le rétrécissement du diamètre de la tige de poussée était du à un frottement de la tige de poussée contre une bague de guidage présente à une entrée du maître cylindre. Cette bague de guidage permet, comme son nom l'indique, de guider la tige de poussée à l'intérieur du maître cylindre. Or, les frottements contre cette bague de guidage provoquant une fuite hydraulique et/ou une fuite pneumatique du fait d'une usure précoce de la tige de poussée sont du à un déplacement radial de cette même tige de poussée par rapport à un axe du servomoteur en même temps que cette tige de poussée se déplace longitudinalement selon l'axe du servomoteur.

Pour empêcher une usure trop précoce de la tige de poussée, il pourrait être possible d'élargir un diamètre de la tige de poussée pour qu'elle soit moins susceptible de bouger radialement par rapport à l'axe du servomoteur. Cependant, une telle augmentation de la taille de la tige de poussée pourrait entraîner une augmentation du volume et du poids du servomoteur.

Pour diminuer, voire empêcher une usure précoce de la tige de poussée du servomoteur, l'invention prévoit de guider le déplacement longitudinal du ressort de rappel par rapport à l'axe du servomoteur par l'intermédiaire d'un dispositif de guidage de ce même ressort de rappel. Ce dispositif de guidage est réalisé de telle manière qu'il est situé entre le piston pneumatique et la deuxième chambre avant du servomoteur selon l'axe du servomoteur. Ce dispositif de guidage est réalisé de telle manière qu'il empêche le ressort de rappel de se déplacer radialement par rapport à l'axe du servomoteur. En empêchant le ressort de rappel de se déplacer radialement par rapport à l'axe du servomoteur, la tige de poussée est alors elle aussi guidée indirectement selon l'axe du servomoteur et n'est plus susceptible de s'écarter radialement de l'axe du servomoteur.

Le ressort de rappel est guidé par l'intermédiaire d'une première pièce de jonction et par l'intermédiaire d'une deuxième pièce de jonction disposées respectivement entre le piston pneumatique et le ressort de rappel d'une part, et entre le ressort de rappel et la deuxième chambre avant du servomoteur d'autre part. La première pièce de jonction guide le ressort de rappel par l'intermédiaire d'une cage recouvrant partiellement le ressort de rappel. La première pièce de jonction recouvre partiellement le ressort de rappel au moins depuis un site d'appui du ressort de rappel au piston pneumatique jusqu'à une extrémité de l'expansion cylindrique du maître cylindre. On entend par extrémité de l'expansion cylindrique du maître cylindre, une partie de cette même expansion destinée à rentrer la première dans la deuxième chambre avant du servomoteur. La deuxième pièce de jonction guide le ressort de rappel par une glissière s'étendant parallèlement par rapport à l'axe du servomoteur, laquelle glissière servant d'appui et de guide au ressort de rappel.

L'invention prévoit également dans un mode préféré, de disposer entre le piston pneumatique et le maître cylindre un premier ressort de rappel et un deuxième ressort de rappel, les deux ressorts de rappel étant réalisés avec des spires inversées l'un par rapport à l'autre.

L'invention présente comme avantages d'une part, de pouvoir guider longitudinalement par rapport à l'axe du servomoteur le ressort de rappel, d'autre part, d'obtenir un gain de place dans le servomoteur longitudinalement par rapport à l'axe de ce même servomoteur, et enfin de pouvoir guider longitudinalement par rapport à l'axe du servomoteur le piston pneumatique suivant l'axe du servomoteur pour éviter une fuite pneumatique entre les chambres avant et les chambres arrière au niveau du joint de cloison.

L'invention a donc pour objet un servomoteur pneumatique d'assistance de freinage d'un véhicule avec les caractéristiques de la revendication 1.

L'invention a également pour objet un procédé de montage d'un servomoteur pneumatique d'assistance de freinage sur un maître cylindre d'un véhicule caractérisé en ce qu'il comporte les étapes suivantes
- on insère au moins un ressort de rappel dans au moins un crochet d'une première pièce de jonction,
- on insère le ressort de rappel avec la première pièce de jonction dans au moins un crochet correspondant d'une deuxième pièce de jonction,
- on insère la première pièce de jonction dans une cheminée du piston pneumatique, et
- on pose la première pièce de jonction dans la chambre avant du servomoteur.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : une représentation schématique d'un servomoteur pneumatique d'assistance de freinage d'un véhicule, selon l'invention ;
- Figures 2a et 2b : des représentations tridimensionnelles d'une première pièce de jonction et d'une deuxième pièce de jonction respectivement, selon l'invention ;
- Figure 3 : une représentation tridimensionnelle d'un moyen élastique de rappel muni de la première pièce de jonction et de la deuxième pièce de jonction, selon l'invention ;
- Figure 4 : une représentation tridimensionnelle d'un moyen élastique de rappel muni de la première pièce de jonction et de la deuxième pièce de jonction intégré dans un servomoteur, selon l'invention; et
- Figures 5a et 5b : des coupes transversales d'un piston pneumatique et d'une première pièce de jonction, selon l'invention.

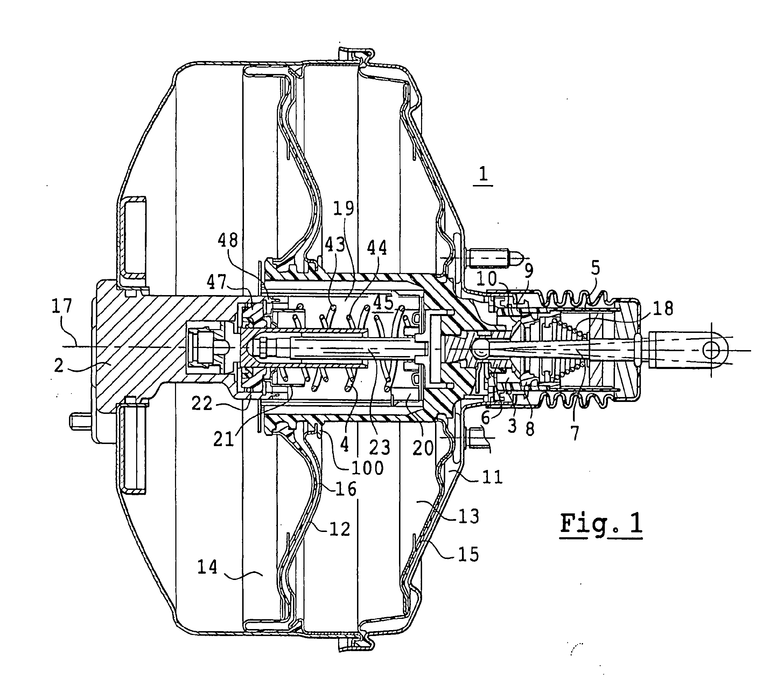

La figure 1 montre un servomoteur d'assistance pneumatique de freinage 1 d'un véhicule comportant depuis une pédale de frein (non représentée) jusqu'à un maître cylindre 2 du véhicule, au moins une chambre arrière 11, 12, au moins une chambre avant 13, 14, un piston pneumatique 5 et au moins un moyen élastique de rappel 4, selon l'invention. Dans l'exemple figure 1, le servomoteur d'assistance pneumatique de freinage 1 est un servomoteur tandem. Mais il pourrait également s'agir d'un servomoteur pneumatique d'assistance simple.

Le piston pneumatique fait parti d'une valve d'admission de fluide 3, laquelle valve est destinée à s'ouvrir pour laisser pénétrer un fluide dans le servomoteur. Une valve d'admission de fluide d'un tel servomoteur tandem comporte un piston pneumatique 5 et un plongeur 6, lequel plongeur est destiné à recevoir une tige de commande de frein 7. La tige de commande de frein est d'ailleurs destinée à entraîner longitudinalement par rapport à un axe 17 du servomoteur en direction de maître une tige de poussée 23 lors d'un freinage. L'ensemble piston pneumatique et plongeur forme la valve d'admission de fluide 3 en coulissant longitudinalement l'un par rapport à l'autre et par rapport à l'axe 17 du servomoteur. Plus précisément, un premier siège 9 formé par une excroissance du piston pneumatique et un deuxième siège 10 formé par le plongeur forment la valve d'admission de fluide. Le premier siège et le deuxième siège sont destinés à se plaquer contre un anneau élastique 8 inséré sur un pourtour intérieur du piston pneumatique. Au repos, le piston pneumatique et le plongeur sont en appui par le premier siège 9 et par le deuxième siège 10 respectivement contre cet anneau élastique. Lors du déplacement de la tige de commande de frein en direction du maître cylindre 2, le deuxième siège 10 formé par le plongeur 6 se détache de l'anneau élastique 8 entraînant le passage d'un fluide propulseur en direction d'une première chambre arrière 11 et d'une deuxième chambre arrière 12 du servomoteur. Comme précédemment mentionné, le fluide peut être de l'air sous pression atmosphérique.

Le servomoteur tandem comporte depuis la pédale de frein jusqu'au maître cylindre une première chambre arrière 11 et une première chambre avant 13 disposées en séries avec une deuxième chambre arrière 12 et une deuxième chambre avant 14. La première chambre avant et la première chambre arrière sont séparées de la deuxième chambre avant et de la deuxième chambre arrière par un joint de cloison 100. Comme précédemment mentionné, la première chambre avant 13 et la deuxième chambre avant 14 sont positionnées par rapport à la première chambre arrière 11 et à la deuxième chambre arrière 12 respectivement de telle manière que la première chambre avant 13 et la deuxième chambre avant 14 sont proche du maître cylindre alors que la première chambre arrière 11 et la deuxième chambre arrière 12 sont éloignées du maître cylindre. Chacune des chambres avant 13 et 14 est vide d'air et comporte un volume variable. Chacune des chambres arrière 11 et 12 est vide d'air au repos et comporte également un volume variable. Chacune des chambres avant est séparée de chacune des chambres arrière par une cloison 15 et 16 respectivement formée par une membrane étanche et souple et par une plaque jupe rigide. La plaque jupe rigide est reliée perpendiculairement à l'axe 17 du servomoteur depuis une paroi de ce servomoteur jusqu'au piston pneumatique. On entend par paroi du servomoteur, la cloison externe qui délimite le servomoteur dans l'espace.

Le servomoteur peut être relié au maître cylindre par l'intermédiaire d'une expansion cylindrique 22, laquelle expansion cylindrique est destinée à s'insérer dans la deuxième chambre avant du servomoteur selon l'axe 17 du servomoteur. L'expansion cylindrique comporte une bague de guidage 47 destinée à recevoir la tige de poussée 23.

Lorsque le conducteur appuie sur la pédale de frein, le déplacement du deuxième siège 10 formé par le plongeur 6 de l'anneau élastique 8 maintient la fermeture de la communication 9 de chacune des chambres arrière 11 et 12 avec chacune des chambres avant 13 et 14.

Il se crée alors une différence de pression entre chacune des chambres arrière et des chambres avant, entraînant alors le déplacement de la plaque jupe rigide selon une direction parallèle à l'axe 17 du servomoteur et en direction du maître cylindre 2. Le déplacement de cette plaque jupe rigide entraîne également le déplacement du piston pneumatique 5 selon cette même direction. Le premier siège 9 du piston pneumatique reste au contact avec l'anneau élastique 8, car ce dernier est maintenu relativement en place par un ressort (non représenté). Un maintient prolongé sur la pédale de frein entraîne le retour en appui du deuxième siège 10 contre l'anneau élastique. Ce retour en appui ferme alors la communication entre chacune des chambres arrière avec le fluide de haute pression. Puis, lors du relâchement de la pédale de frein, le piston pneumatique et le plongeur retournent progressivement dans leur position initiale de repos en direction de la pédale de frein en venant se plaquer contre l'anneau élastique par le premier siège et par le deuxième siège et admettant la mise en communication à nouveau de chacune des chambres arrières avec chacune des chambres avant. Progressivement le retour au vide des chambres arrière se réalise par l'intermédiaire d'une pompe à vide placée à proximité des chambres avant.

La valve d'admission de fluide du servomoteur retourne essentiellement dans sa position initiale de repos par l'intermédiaire d'au moins un moyen élastique de rappel 4. Ce moyen élastique de rappel prend appui contre un endroit situé dans la deuxième chambre avant. Notamment, le moyen élastique de rappel 4 peut prendre appui contre une paroi délimitant la deuxième chambre avant 14 à proximité de l'endroit où s'insère l'expansion cylindrique 22 du maître cylindre tout en encerclant l'expansion cylindrique. Ou bien, le moyen élastique de rappel peut prendre appui contre une extrémité 48 de l'expansion cylindrique, laquelle extrémité 48 est une partie du maître cylindre qui entre en premier dans la deuxième chambre avant du servomoteur et qui est la plus proche du piston pneumatique, figure 1.

Au repos, ou lorsque le conducteur n'appuie pas sur la pédale de frein, chacune des chambres avant et arrière sont connectées entre elles et les chambres arrières sont isolées par rapport à la pression atmosphérique. Lors du freinage, la tige de commande de frein s'enfonce en direction du maître cylindre. En s'enfonçant en direction du maître cylindre, la tige de commande de frein entraîne le déplacement du plongeur selon cette même direction. Le déplacement du plongeur en direction du maître cylindre permet d'isoler chacune des chambres arrière par rapport aux chambres avant. Le déplacement du plongeur en direction du maître cylindre permet également une entrée de fluide dans chacune des chambres arrière. Cette admission de fluide a pour effet de propulser chacune des cloisons et de mettre en oeuvre l'assistance de freinage pneumatique. Chacune des cloisons entraîne alors le déplacement du piston pneumatique en direction du maître cylindre. Le déplacement du piston pneumatique en direction du maître cylindre entraîne une compression du moyen élastique de rappel 4.

Selon l'invention, le servomoteur comporte des moyens 45 pour guider le moyen élastique de rappel 4. Comme précédemment mentionné, l'invention présente ainsi comme avantages d'une part, de pouvoir guider longitudinalement par rapport à l'axe du servomoteur le moyen élastique de rappel 4, d'autre part, d'obtenir un gain de place dans le servomoteur longitudinalement par rapport à l'axe de ce même servomoteur, et enfin de pouvoir guider longitudinalement par rapport à l'axe du servomoteur le piston pneumatique suivant l'axe 17 du servomoteur pour éviter une fuite pneumatique entre les chambres avant 13, 14 et les chambres arrière 11, 12 au niveau du joint de cloison 100.

Les moyens 45, selon l'invention, forment un dispositif de guidage 45 lequel dispositif de guidage 45 est disposé entre le piston pneumatique et la deuxième chambre avant du servomoteur. Le dispositif de guidage 45 permet au moyen élastique de rappel 4 de se comprimer selon l'axe 17 du servomoteur tout en étant guidé longitudinalement par rapport à ce même axe du servomoteur par ce même dispositif de guidage 45.

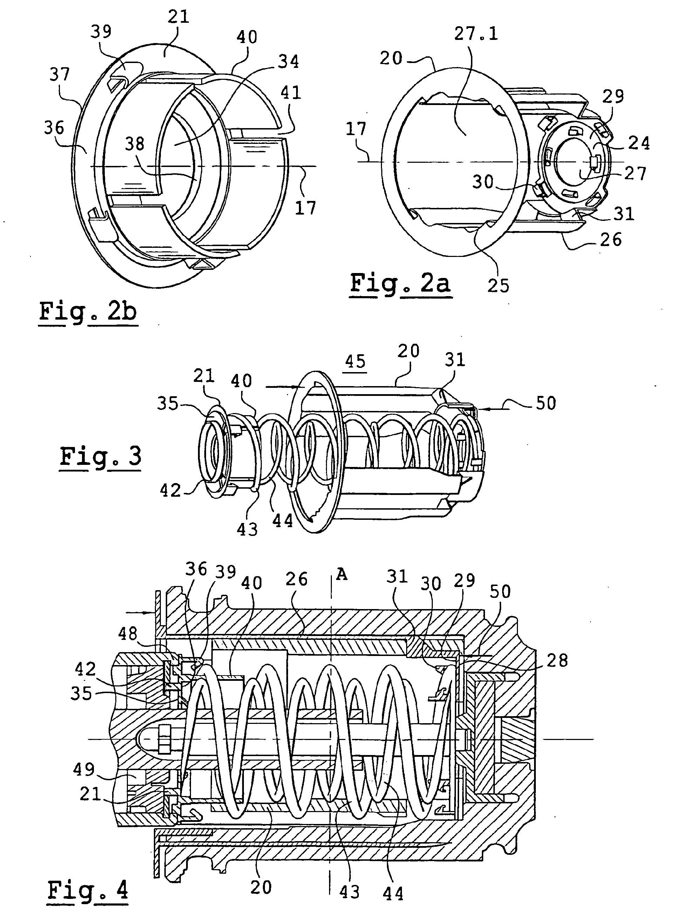

Pour guider le moyen élastique de rappel, selon l'invention, le dispositif de guidage comporte depuis une pédale de frein jusqu'au maître cylindre, une première pièce de jonction 20 et une deuxième pièce de jonction 21. La première pièce de jonction est destinée à s'intercaler entre le piston pneumatique 5 et le moyen élastique de rappel 4. La deuxième pièce de jonction 21 est destinée à s'intercaler entre le moyen élastique de rappel 4 et la deuxième chambre avant du servomoteur. L'utilisation d'un tel moyen élastique de rappel pour un servomoteur simple ne sort pas du cadre de la présente invention. Les figures 2a et 2b représentent respectivement en perspective la première pièce de jonction 20 et la deuxième pièce de jonction 21.

Ce moyen élastique de rappel est intégré indirectement en partie dans la valve d'admission 3 par l'intermédiaire de la première pièce de jonction 20. Ce moyen élastique 4 ainsi intégré selon l'invention permet d'obtenir un gain de place à l'intérieur du servomoteur. Plus particulièrement, le moyen élastique de rappel est intégré dans le piston pneumatique 5 de la valve d'admission. Pour ce faire, le piston pneumatique est creusé en regard du maître cylindre d'une cavité 19. Cette cavité forme une cheminée à l'intérieur de laquelle s'insère le moyen élastique de rappel. Le moyen élastique de rappel s'insère à l'intérieur de la cheminée du piston pneumatique par l'intermédiaire de cette première pièce de jonction 20.

La première pièce de jonction 20 comporte une forme de cage s'adaptant par complémentarité à la forme de la paroi délimitée par la cheminée du piston pneumatique. La première pièce de jonction comporte un premier disque 24 destiné à être en regard du piston pneumatique et un deuxième disque 25 destiné à être éloigné du piston pneumatique. Le premier disque et le deuxième disque sont percés d'un orifice central 27 et 27.1 respectivement.

Dans le cas où le moyen élastique de rappel est en appui contre l'extrémité de l'expansion cylindrique du maître cylindre selon un mode préféré de l'invention, un diamètre de l'orifice central 27.1 du deuxième disque est au moins supérieur à un diamètre délimité par l'expansion cylindrique du maître cylindre. Le diamètre de l'orifice central 27.1 alors est réalisé de telle manière que la première pièce de jonction peut coulisser le long d'une paroi délimitée par l'expansion cylindrique du maître cylindre.

Dans le cas où le moyen élastique de rappel est en appui contre la paroi de la deuxième chambre avant du servomoteur tout en encerclant l'expansion cylindrique du maître cylindre, un diamètre de l'orifice 27.1 est cette fois-ci au moins supérieur à un diamètre délimité par le moyen élastique de rappel placé autour de l'expansion cylindrique du maître cylindre.

Dans l'exemple figure 2a, cette première pièce de jonction comporte une forme conique mais pourrait avoir une autre forme rectangulaire par exemple. Dans ce même exemple figure 2a, cette première pièce de jonction est munie de quatre languettes mais ces languettes pourraient être réalisées de telle manière qu'elles sont continues les unes à la suite des autres pour former une paroi continue. Le premier disque 24 comporte une face 28 (non représentée figure 2a mais représentée figure 4) destinée à être en regard du piston pneumatique et une face 29 destinée à être éloignée du piston pneumatique. La face 28 est plaquée contre un fond de cette cheminée. Un fond de la cheminée est un endroit de la cavité formée par la cheminée le plus éloigné du maître cylindre. Sur la face 29 du premier disque peut être disposé au moins un crochet 30. Dans l'exemple figure 2a, ce premier disque comporte quatre crochets disposés circulairement en une rangée par rapport à l'axe 17 du servomoteur. Ces quatre crochets sont répartis angulairement en une rangée circulaire par rapport à l'axe 17 du servomoteur. Mais ce premier disque peut comporter quatre autres crochets disposés circulairement par rapport au même axe du servomoteur sur une autre rangée de telle manière que le disque comporte une première rangée de crochets et une deuxième rangée de crochets, un diamètre délimité par la première rangée de crochets étant supérieur à un autre diamètre délimité par la deuxième rangée de crochets. Dans l'exemple figure 2a, la première rangée est éloignée de l'axe 17 du servomoteur et la deuxième rangée est proche de l'axe 17 du servomoteur.

Le premier disque et le deuxième disque sont reliés par au moins une languette 26. Dans l'exemple figure 3, le premier disque et le deuxième disque sont reliés par quatre languettes. Les languettes sont fixées au deuxième disque sur un cercle délimité par l'orifice 27.1 de sorte que le deuxième disque peut venir en butée, perpendiculairement à un plan formé par les languettes contre une extrémité du piston pneumatique, la plus proche du maître cylindre.

Chacune des languettes possède selon une direction parallèle à l'axe du servomoteur une longueur 50 au moins égale à une distance séparant un site d'appui du moyen élastique de rappel sur le piston pneumatique jusqu'à l'extrémité 48 de l'expansion cylindrique, laquelle longueur 50 n'empêchant pas la tige de poussée de coulisser dans l'expansion cylindrique du maître cylindre longitudinalement par rapport à l'axe du servomoteur lors du freinage et du défreinage du véhicule. La longueur de chacune des languettes correspond également à une longueur réalisée de telle manière que le deuxième disque n'entre pas au contact d'un obstacle lors du déplacement longitudinal du piston pneumatique en direction du maître cylindre. Un obstacle peut être par exemple la paroi délimitée par la deuxième chambre avant du servomoteur pouvant alors empêcher la tige de poussée de s'enfoncer complètement et librement à l'intérieur de l'expansion cylindrique du maître cylindre au cours du freinage du véhicule.

Ainsi, lors de la compression longitudinale par rapport à un axe du servomoteur du moyen élastique de rappel en direction du maître cylindre, les languettes de la première pièce de jonction peuvent se retrouver directement au regard de la paroi délimitée par l'expansion cylindrique 22 du maître cylindre empêchant le moyen élastique de rappel de s'écarter radialement de l'axe du servomoteur. Ou bien lors de la compression longitudinale par rapport à un axe du servomoteur du moyen élastique de rappel en direction du maître cylindre, les languettes peuvent se retrouver en regard du moyen élastique de rappel et de l'expansion cylindrique du maître cylindre lorsque le moyen élastique est inséré sur la paroi du servomoteur.

Les languettes sont également réalisées de telle manière qu'à un endroit situé sur ces mêmes languettes est formé au moins une pliure 31 tendant à être oblique, voire perpendiculaire, par rapport à l'axe 17 du servomoteur, figures 2a et 4. Cette pliure est, de préférence, située à un endroit proche du site d'appui du moyen élastique de rappel au piston pneumatique, c'est-à-dire proche du premier disque et éloignée du deuxième disque de cette première pièce de jonction. Elles sont également réparties de préférence selon un même cercle par rapport à l'axe du servomoteur correspondant à un axe du dispositif de guidage du ressort de rappel. Les languettes pourraient comporter plusieurs pliures. Ces pliures sont réalisées de telle manière que, de part et d'autre de ces pliures, un diamètre délimité par les languettes à proximité du premier disque 24 est plus petit qu'un diamètre délimité par ces mêmes languettes proches du deuxième disque 25.

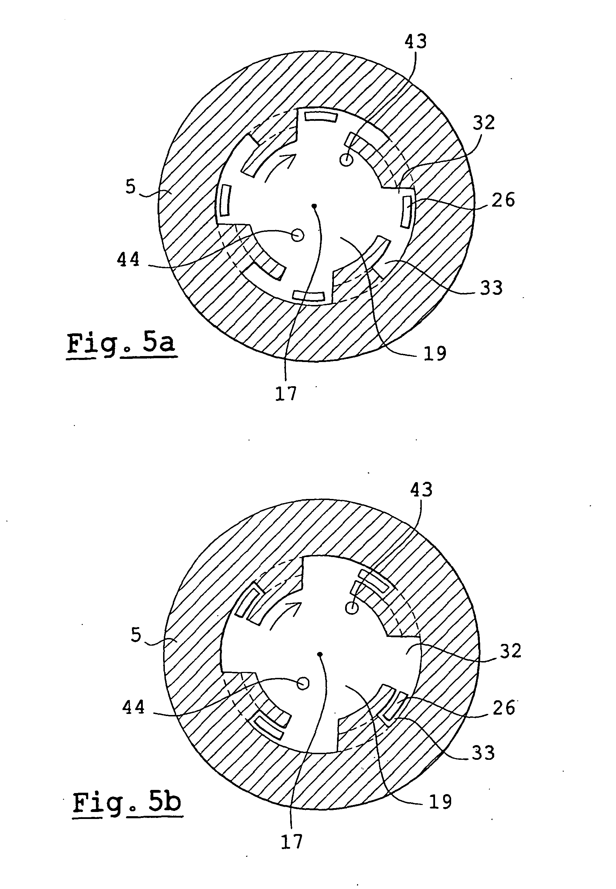

Pour insérer cette première pièce de jonction 20 dans le piston pneumatique, la cavité 19 du piston pneumatique destinée à être en regard de l'expansion cylindrique du maître cylindre est creusée de tranchées 32 longitudinales par rapport à l'axe du servomoteur dont la forme correspond à la forme des languettes avec leur pliure respective, figures 5a et 5b. Les figures 5a et 5b représentent une coupe transversale de la cavité du piston pneumatique et des languettes de la première pièce de jonction 20 selon une section A de la figure 4. La cavité du piston pneumatique est creusée également de telle manière que la cavité comporte des moyens permettant de retenir la première pièce de jonction 20 dans la cavité du piston pneumatique. Les moyens pour retenir la première pièce de jonction peuvent être des fentes 33 formées à partir des tranchées et s'étendant à partir d'un côté des tranchées tout le long des tranchées circulairement et longitudinalement par rapport à l'axe du servomoteur, figures 5a et 5b. Ces fentes comportent également une forme correspondant à celle des languettes avec leur pliure respectives. Ces fentes peuvent se rejoindre par l'intermédiaire des tranchées comme représenté par des traits en pointillés sur les figures 5a et 5b. De préférence, ces fentes ne se rejoignent pas entre elles et sont réalisées selon un même sens d'une tranchée à une autre. Dans ce même exemple figures 5a et 5b, la cavité du piston pneumatique est creusée de quatre tranchées et de quatre fentes. Cette cavité pourrait être creusée de plus ou moins de quatre tranchées et de plus ou moins de quatre fentes correspondantes.

Ainsi une fois les languettes insérer dans les tranchées figure 5a, il suffit de tourner les languettes de la première pièce de jonction 20 dans un sens autour de l'axe 17 du servomoteur pour insérer chacune des languettes dans les fentes correspondantes. Le sens de rotation de la première pièce de jonction 20 est représenté par une flèche figures 5a et 5b. De cette manière, les pliures permettent de retenir la première pièce de jonction dans ces fentes par appui de ces pliures contre le piston pneumatique lorsque le piston pneumatique tend à revenir en position initiale de repos vers la pédale de frein. En retenant la première pièce de jonction 20, il est possible de retenir le moyen élastique de rappel, lequel moyen élastique de rappel est destiné à se fixer à cette première pièce de jonction par les crochets 30.

Dans le cas où les languettes formeraient une paroi uniforme, il pourrait être prévu des petits hameçons (non représentés) en forme de crochet fixés sur cette paroi. Ces petits hameçons pourraient être fixés sur une face de la paroi formée par les languettes, laquelle face serait destinée à être en regard directement de la cavité du piston pneumatique. Ces hameçons pourraient alors s'encastrer dans la cavité du piston pneumatique par l'intermédiaire de petits trous creusés dans cette même cavité de forme correspondante. Ces trous seraient également munis d'une fente pour faire glisser par rotation autour de l'axe du servomoteur la première pièce de jonction dans ces fentes. Ces hameçons permettraient ainsi de retenir la première pièce de jonction et donc le moyen élastique de rappel.

La deuxième pièce de jonction 21 possède une forme de rondelle avec un orifice central 34, figure 2b. Cette deuxième pièce de jonction est placée entre le moyen élastique de rappel et la deuxième chambre avant du servomoteur. Plus particulièrement, cette deuxième pièce de jonction peut être placée entre le moyen élastique de rappel et la paroi de la deuxième chambre avant tout en encerclant l'expansion cylindrique du maître cylindre. Ou bien, selon le mode préféré de l'invention, cette deuxième pièce de rappel peut être placée entre le moyen élastique de rappel et l'extrémité 48 de l'expansion cylindrique 22 du maître cylindre.

Comme pour la première pièce de jonction, dans le cas où la deuxième pièce est disposée sur la paroi de la deuxième chambre avant du servomoteur, cette deuxième pièce de jonction comporte un orifice central 34 de diamètre supérieur à un diamètre délimité par le moyen élastique de rappel encerclant l'expansion cylindrique. Ou bien, dans le cas du mode préféré de l'invention où la deuxième pièce est placée entre le moyen élastique de rappel et l'extrémité 48 de l'expansion cylindrique, l'orifice 34 comporte un diamètre correspondant à un diamètre délimité par l'expansion cylindrique.

Cette deuxième pièce de jonction 21 comporte une première face 35 (non visible sur la figure 2b mais visible sur les figures 3 et 4) destinée à ne pas faire face au piston pneumatique et une deuxième face 36 destinée à être en regard du piston pneumatique. Dans l'exemple figure 1, la première face 35 est située en regard de l'extrémité 48 de l'expansion cylindrique du maître cylindre. Mais cette première face pourrait être située en regard de la paroi de la deuxième chambre avant du servomoteur autour de l'expansion cylindrique. Cette deuxième pièce de jonction est placée de telle manière qu'un plan formé par cette deuxième pièce de jonction est perpendiculaire à l'axe 17 du servomoteur.

De la même manière que pour la première pièce de jonction, cette deuxième pièce de jonction est circulaire mais pourrait comporter une toute autre forme comme par exemple rectangulaire ou elliptique. Cette deuxième pièce comporte une périphérie externe 37 correspondant à un endroit de cette deuxième pièce de jonction éloignée de l'axe 17 du servomoteur et une périphérie interne 38 correspondant à un endroit de cette deuxième pièce de jonction proche de l'axe du servomoteur.

La deuxième face 36 de la deuxième pièce de jonction destinée à être en regard du piston pneumatique peut comporter également au moins un crochet 39 pour fixer le moyen élastique de rappel. Dans un exemple préféré, cette deuxième pièce de jonction comporte au moins quatre crochets alignés circulairement les uns à la suite des autres en une rangée par rapport à l'axe du servomoteur. Comme pour les crochets 30 de la première pièce de jonction. Ces quatre crochets sont répartis angulairement en une rangée circulaire par rapport à l'axe 17 du servomoteur. Mais ce deuxième disque peut comporter quatre autres crochets disposés circulairement par rapport au même axe du servomoteur sur une autre rangée de telle manière que le deuxième disque comporte une première rangée de crochets et une deuxième rangée de crochets, un diamètre délimité par la première rangée de crochets étant supérieur à un autre diamètre délimité par la deuxième rangée de crochets. Une première rangée et une deuxième rangée de crochets sont représentées sur la figure 4 mais seule une seule rangée de crochets est représentée figure 2b. Dans l'exemple figure 4, la première rangée est éloignée de l'axe 17 du servomoteur et la deuxième rangée est proche de l'axe 17 du servomoteur.

La deuxième face 36 de cette deuxième pièce de jonction peut former également une glissière 40 au moins partiellement annulaire. La glissière s'étend perpendiculairement au plan de cette deuxième pièce de jonction et longitudinalement par rapport à l'axe 17 du servomoteur. Cette glissière peut former une paroi continue. Ou bien cette glissière peut être formée par une succession de matières et entrecoupée par des espaces 41, figure 2b. Cette glissière peut être placée, dans un mode préféré de l'invention, entre la première rangée de crochets et la deuxième rangée de crochets précédemment mentionnées, figure 4. Cette glissière permet de guider le moyen élastique de rappel selon une direction longitudinale par rapport à l'axe du servomoteur lors de sa compression par le piston pneumatique.

La première face 35 destinée à ne pas faire face au piston pneumatique comporte une protubérance 42 au moins partiellement annulaire. Dan le cas où cette deuxième pièce est destinée à s'insérer sur l'extrémité de l'expansion cylindrique, cette protubérance s'insère librement dans un orifice 49 délimité par l'expansion cylindrique du maître cylindre. Un diamètre délimité par cette protubérance annulaire est légèrement inférieur à un diamètre délimité par l'expansion cylindrique du maître cylindre. Cette protubérance est réalisée de telle manière que la deuxième pièce de jonction 21 n'est pas susceptible de se déplacer radialement par rapport à l'axe 17 du servomoteur lors du déplacement de la tige de poussée.

Ou bien cette protubérance peut être interrompue par des espaces (non représentés) de telle manière qu'elle forme au moins deux petites protubérances, voire une série de protubérances disposées circulairement par rapport à l'axe du servomoteur. Ces protubérances pourraient être disposées circulairement de manière à délimiter également un cercle d'un diamètre légèrement inférieur à un diamètre délimité par l'expansion cylindrique du maître cylindre.

Dans le cas où la deuxième pièce de jonction s'insère autour de l'expansion cylindrique sur la paroi de la deuxième chambre avant du servomoteur (non représenté), la protubérance annulaire peut s'insérer dans une cavité correspondante (non représentée) qui serait alors creusée dans la paroi de cette même chambre avant du servomoteur.

Dans le mode préféré de l'invention, le piston pneumatique est relié au maître cylindre par un premier ressort de rappel 43 et par un deuxième ressort de rappel 44, le premier ressort de rappel 43 et le deuxième ressort de rappel 44 formant le moyen élastique de rappel 4, figures 3 et 4. Mais le piston pneumatique pourrait être relié par trois ressorts, voire plus. Pour insérer ces deux ressorts de rappel, la première pièce de jonction et la deuxième pièce de jonction peuvent comporter chacune deux séries de crochets disposées circulairement par rapport à l'axe du servomoteur. Les deux séries de crochets peuvent être disposées de part et d'autre de la glissière 40 sur la deuxième pièce de jonction 21. Ainsi, la première série de crochet peut être disposée à proximité de la périphérie externe 37 de la deuxième pièce de jonction 21 et servir à accrocher le premier ressort de rappel 43. La deuxième série de crochets pourrait être disposé à proximité de la périphérie interne 38 de cette même deuxième pièce de jonction 21 et servir à accrocher le deuxième ressort de rappel 44. Pour ce faire, le premier ressort de rappel 43 possède un diamètre plus grand que le deuxième ressort de rappel 44. Les deux séries de crochets sont disposées sur la première pièce de jonction 20 en correspondance de deux séries de crochets de la deuxième pièce de jonction 21. De préférence, les deux ressorts de rappel sont des ressorts à spires inversées de manière à éviter que les spires de chacun des ressorts ne se mélangent entre elles.

Le montage d'un tel servomoteur tandem à un maître cylindre est réalisé de la manière suivante. Tout d'abord on positionne le moyen élastique de rappel 4 sur la première pièce de jonction 20 par l'intermédiaire d'au moins un crochet 30. Puis le moyen élastique de rappel 4 est inséré dans les crochets 39 correspondant présents sur la deuxième pièce de jonction. Le moyen 4 muni de la première pièce de jonction et de la deuxième pièce de jonction est ensuite inséré à l'intérieur de la cavité 19 du piston pneumatique par l'intermédiaire de la première pièce de jonction 20. Cette première pièce de jonction est insérée dans les tranchées 32 correspondants aux languettes 26. Puis la première pièce de jonction subit une rotation autour de l'axe du servomoteur en prenant par exemple avec les doigts de la main le deuxième disque 25 de la première pièce de jonction 20. Par cette rotation autour de l'axe du servomoteur, les languettes s'insinuent dans les fentes 33 de la cavité 19 prévues à cet effet. Le maître cylindre est alors placé dans le servomoteur de telle manière que l'extrémité de l'expansion cylindrique du maître cylindre est placée contre la deuxième pièce de jonction. La deuxième pièce de jonction est placée alors sur l'extrémité de l'expansion cylindrique du maître cylindre de telle manière que la protubérance 42 s'insèrent correctement dans l'orifice 49 délimité par l'expansion cylindrique du maître cylindre.

La présence de deux ressorts de rappel 43, 44 selon la variante de l'invention permet d'augmenter l'effort fourni par ces deux ressorts pour repousser le piston pneumatique en direction de la pédale de frein. Et enfin, le piston pneumatique et la tige de poussée présentent une meilleure stabilité lors de leur déplacement longitudinal par rapport à l'axe du servomoteur du fait de la présence de la glissière annulaire 40 guidant le ressort de rappel et du fait de la présence de la protubérance 42 maintenant en place la deuxième pièce de jonction sur l'expansion cylindrique du maître cylindre.

## Revendications

1. - Servomoteur (1) pneumatique d'assistance de freinage d'un véhicule comportant depuis une pédale de frein jusqu'à un maître cylindre (2) du véhicule
- au moins une chambre arrière (11, 12),
- au moins une chambre avant (13, 14),
- un piston pneumatique (5), et
au moins un moyen élastique de rappel (4) monté en appui contre le piston pneumatique (5) et contre une paroi délimitant la chambre avant (13,14) du servomoteur selon un axe (17) du servomoteur,
- des moyens (45) pour guider le moyen élastique de rappel (4) **caractérisé en ce que** les moyens (45) comportent depuis la pédale de frein jusqu'au maître cylindre et selon l'axe (17) du servomoteur une première pièce de jonction (20) et une deuxième pièce de jonction (21), la première pièce de jonction (20) étant disposée entre le piston pneumatique (5) et le moyen élastique de rappel, et la deuxième pièce de jonction (21) étant disposée entre le moyen élastique de rappel et la chambre avant (13,14) du servomoteur (1).

2. - Servomoteur selon la revendication 1 **caractérisé en ce que**
- le piston pneumatique (5) est creusé à une extrémité destinée à être en regard du maître cylindre (2) d'une cheminée (19),
- la première pièce de jonction (20) comporte une forme s'adaptant par complémentarité à une forme de la cheminée du piston pneumatique (5).

3. - Servomoteur selon l'une des revendications 1 ou 2 **caractérisé en ce que**
- la première pièce de jonction (20) comporte un premier disque (24) destiné à être en regard du piston pneumatique (5) et un deuxième disque (25) destiné à être éloigné du piston pneumatique (5),
- le premier disque (24) et le deuxième disque (25) sont reliés par au moins une languette (26) selon une direction longitudinale par rapport à l'axe (17) du servomoteur (1).

4. - Servomoteur selon la revendication 3 **caractérisé en ce que** la languette (26) comporte au moins une pliure (31) tendant à être oblique par rapport à l'axe (17) du servomoteur (1).

5. - Servomoteur selon l'une des revendications 3 à 4 **caractérisé en ce que**
- un maître cylindre (2) s'insère dans une chambre avant (13, 14) du servomoteur (1) par l'intermédiaire d'une expansion cylindrique (22), laquelle expansion cylindrique comporte une extrémité (48) destinée à être la plus proche du piston pneumatique (5),
- la languette (26) comporte une longueur (50) selon l'axe (17) du servomoteur au moins égale à une distance séparant un site d'appui du moyen élastique de rappel sur le piston pneumatique (5) jusqu'à l'extrémité de l'expansion cylindrique du maître cylindre (2).

6. - Servomoteur selon l'une des revendications 3 à 5 **caractérisé en ce que** la première pièce de jonction (20) comporte quatre languettes (26).

7. - Servomoteur selon l'une quelconque des revendications précédentes **caractérisé en ce que**
- la deuxième pièce de jonction (21) possède une forme de rondelle avec une première face (35) destinée à ne pas faire face au piston pneumatique (5) et une deuxième face (36) destinée à être au regard du piston pneumatique (5),
- la première face (35) comporte une protubérance (42) au moins partiellement annulaire, laquelle protubérance est destinée à s'insérer dans un orifice (49) délimité par l'expansion cylindrique (22) du maître cylindre (2), et
- la deuxième face (36) comporte une glissière (40) au moins partiellement annulaire s'étendant perpendiculairement par rapport à un plan de la deuxième pièce de jonction (20) et longitudinalement par rapport à l'axe (17) du servomoteur (1).

8. - Servomoteur selon l'une quelconque des revendications précédentes **caractérisé en ce que** la première pièce de jonction (20) et la deuxième pièce (21) de jonction comportent au moins un crochet (30, 39) chacun.

9. - Servomoteur selon la revendication 8 **caractérisé en ce que** la première pièce de jonction (20) et la deuxième pièce de jonction (21) comportent plusieurs crochets (30,39) répartis angulairement en au moins une rangée circulaire par rapport à un axe (17) du servomoteur.

10. - Servomoteur selon l'une quelconque des revendications précédentes **caractérisé en ce que** le moyen élastique (4) comporte un premier ressort de rappel (43) et un deuxième ressort de rappel (44) disposés entre la première pièce de jonction (20) et la deuxième pièce de jonction (21).

11. - Procédé de montage d'un servomoteur (1) pneumatique d'assistance de freinage d'après une des revendications 1 à 10 sur un maître cylindre (2) d'un véhicule **caractérisé en ce qu**'il comporte les étapes suivantes
- on insère au moins un ressort de rappel (4, 43, 44) dans au moins un crochet (30) d'une première pièce de jonction (20),
- on insère le ressort de rappel avec la première pièce de jonction dans au moins un crochet (39) correspondant d'une deuxième pièce de jonction (21),
- on insère la première pièce de jonction dans une cheminée (19) du piston pneumatique, et
- on pose la première pièce de jonction dans la chambre avant du servomoteur.

12. - Procédé de montage d'un servomoteur selon la revendication 11 **caractérisé en ce qu**'on insère entre la première pièce de jonction (20) et la deuxième pièce de jonction (21) un premier ressort de rappel (43) et un deuxième ressort de rappel (44).

## Claims

1. Vehicle pneumatic brake booster (1) comprising, from a brake pedal to a master cylinder of the vehicle,
- at least one rear chamber (11, 12),
- at least one front chamber (13, 14),
- a pneumatic piston (5),
- at least one elastic return means (4) mounted to bear against the pneumatic piston (5) and against a wall delimiting the front chamber (13,14) of the booster along an axis (17) of the booster, and
- means (45) for guiding the elastic return means (4), **characterized in that** the means (45) comprise, from the brake pedal to the master cylinder and along the axis (17) of the booster, a first junction piece (20) and a second junction piece (21), the first junction piece (20) being arranged between the pneumatic piston (5) and the return elastic means, and the second junction piece (21) being arranged between the return elastic means and the front chamber (13,14) of the booster (1).

2. Booster according to claim 1, **characterized in that**
- the pneumatic piston (5) has a bore (19) made in it at an end intended to be opposite the master cylinder (2),
- the first junction piece (20) has a shape which is made to match a shape of the bore in the pneumatic piston (5).

3. Booster according to either of claims 1 and 2, **characterized in that**
- the first junction piece (20) comprises a first disk (24) intended to be opposite the pneumatic piston (5) and a second disk (25) intended to be remote from the pneumatic piston (5),
- the first disk (24) and the second disk (25) are connected by at least one tongue (26) in a longitudinal direction with respect to the axis (17) of the booster (1).

4. Booster according to claim 3, **characterized in that** the tongue (26) comprises at least one fold (31) tending to be oblique with respect to the axis (17) of the booster (1).

5. Booster according to either of claims 3 and 4, **characterized in that**
- a master cylinder (2) is inserted into a front chamber (13, 14) of the booster (1) by way of a cylindrical expansion (22), which cylindrical expansion comprises an end (48) intended to be closest to the pneumatic piston (5),
- the tongue (26) has a length (50) along the axis (17) of the booster which is at least equal to a distance between a point at which the return elastic means bears on the pneumatic piston (5) and the end of the cylindrical expansion of the master cylinder (2à.

6. Booster according to one of claims 3 to 5, **characterized in that** the first junction piece (20) comprises four tongues (26).

7. Booster according to any one of the preceding claims, **characterized in that**
- the second junction piece (21) is in the shape of a washer with a first face (35) intended not to face the pneumatic piston (5) and a second face (36) intended to be opposite the pneumatic piston (5),
- the first face (35) comprises an at least partially annular protuberance (42), which protuberance is intended to be inserted into an orifice (49) delimited by the cylindrical expansion (22) of the master cylinder (2), and
- the second face (36) comprises an at least partially annular slideway (40) extending perpendicularly with respect to a plane of the second junction piece (20) and longitudinally with respect to the axis (17) of the booster (1).

8. Booster according to any one of the preceding claims, **characterized in that** the first junction piece (20) and the second junction piece (21) comprise at least one hook (30, 39) each.

9. Booster according to claim 8, **characterized in that** the first junction piece (20) and the second junction piece (21) comprise a plurality of hooks (30,39) distributed angularly in at least one circular row with respect to an axis (17) of the booster.

10. Booster according to any one of the preceding claims, **characterized in that** the elastic means (4) comprises a first return spring (43) and a second return spring (44) which are arranged between the first junction piece (20) and the second junction piece (21).

11. Method of mounting a pneumatic brake booster (1) according to one of claims 1 to 10 on a master cylinder (2) of a vehicle, **characterized in that** it comprises the following steps
- at least one return spring (4, 43, 44) is inserted into at least one hook (30) of a first junction piece (20),
- the return spring is inserted, together with the first junction piece, into at least one corresponding hook (39) of a second junction piece (21),
- the first junction piece is inserted into a bore (19) in the pneumatic piston, and
- the first junction piece is placed in the front chamber of the booster.

12. Method of mounting a booster according to claim 11, **characterized in that** a first return spring (43) and a second return spring (44) are inserted between the first junction piece (20) and the second junction piece (21).

## Patentansprüche

1. Pneumatischer Fahrzeugservomotor (1) zur Bremsunterstützung, der ausgehend von einem Bremspedal bis zu einem Hauptzylinder (2) des Fahrzeugs Folgendes aufweist:
- mindestens eine hintere Kammer (11, 12),
- mindestens eine vordere Kammer (13, 14),
- einen pneumatischen Kolben (5), und
- mindestens ein elastisches Rückstellmittel (4), das so angebracht ist, dass es am pneumatischen Kolben (5) und an einer Wand anliegt, welche die vordere Kammer (13, 14) des Servomotors gemäß einer Achse (17) des Servomotors begrenzt,
- Mittel (45) zur Führung des elastischen Rückstellmittels (4), **dadurch gekennzeichnet, dass** die Mittel (45) ausgehend vom Bremspedal bis zum Hauptzylinder und gemäß der Achse (17) des Servomotors ein erstes Verbindungsteil (20) und ein zweites Verbindungsteil (21) aufweisen, wobei das erste Verbindungsteil (20) zwischen dem pneumatischen Kolben (5) und dem elastischen Rückstellmittel angeordnet ist und das zweite Verbindungsteil (21) zwischen dem elastischen Rückstellmittel und der vorderen Kammer (13, 14) des Servomotors (1) angeordnet ist.

2. Servomotor nach Anspruch 1, **dadurch gekennzeichnet, dass**
- der pneumatischen Kolben (5) an einem Ende, das dem Hauptzylinder (2) gegenüberliegen soll, mit einem Schacht (19) vertieft ist,
- das erste Verbindungsteil (20) eine Form aufweist, die sich durch Komplementarität an eine Form des Schachts des pneumatischen Kolbens (5) anpasst.

3. Servomotor nach einem der Ansprüche 1 und 2, **dadurch gekennzeichnet, dass**
- das erste Verbindungsteil (20) eine erste Scheibe (24) aufweist, die dem pneumatischen Kolben (5) gegenüberliegen soll, und eine zweite Scheibe (25), die vom pneumatischen Kolben (5) beabstandet sein soll,
- die erste Scheibe (24) und die zweite Scheibe (25) gemäß einer Längsrichtung bezüglich der Achse (17) des Servomotors (1) durch mindestens eine Lasche (26) verbunden sind.

4. Servomotor nach Anspruch 3, **dadurch gekennzeichnet, dass** die Lasche (26) mindestens einen Knick (31) aufweist, der dazu neigt, bezüglich der Achse (17) des Servomotors (1) schräg zu sein.

5. Servomotor nach einem der Ansprüche 3 bis 4, **dadurch gekennzeichnet, dass**
- sich ein Hauptzylinder (2) über einen zylindrischen erweiterten Abschnitt (22) in eine vordere Kammer (13, 14) des Servomotors (1) einfügt, wobei der zylindrische erweiterte Abschnitt ein Ende (48) aufweist, das das Ende sein soll, das dem pneumatischen Kolben (5) am nächsten liegt,
- die Lasche (26) eine Länge (50) gemäß der Achse (17) des Servomotors besitzt, die zumindest einem Abstand zwischen einer Anlagestelle des elastischen Rückstellmittels am pneumatischen Kolben (5) und dem Ende des zylindrischen erweiterten Abschnitts des Hauptzylinders (2) entspricht.

6. Servomotor nach einem der Ansprüche 3 bis 5, **dadurch gekennzeichnet, dass** das erste Verbindungsteil (20) vier Laschen (26) aufweist.

7. Servomotor nach einem der vorhergehenden Ansprüche, **dadurch gekennzeichnet, dass**
- das zweite Verbindungsteil (21) die Form einer kleinen Scheibe mit einer ersten Fläche (35) hat, die dem pneumatischen Kolben (5) nicht gegenüberliegen soll, und mit einer zweiten Fläche (36), die dem pneumatischen Kolben (5) gegenüberliegen soll,
- die erste Fläche (35) einen Vorsprung (42) aufweist, der zumindest teilweise ringförmig ist, wobei der Vorsprung dazu vorgesehen ist, sich in eine Öffnung (49) einzufügen, die durch den zylindrischen erweiterten Abschnitt (22) des Hauptzylinders (2) begrenzt ist, und
- die zweite Fläche (36) eine Gleitfläche (40) aufweist, die zumindest teilweise ringförmig ist und sich senkrecht zu einer Ebene des zweiten Verbindungsteils (20) und bezüglich der Achse (17) des Servomotors (1) in Längsrichtung erstreckt.

8. Servomotor nach einem der vorhergehenden Ansprüche, **dadurch gekennzeichnet, dass** das erste Verbindungsteil (20) und das zweite Verbindungsteil (21) jeweils mindestens einen Haken (30, 39) aufweisen.

9. Servomotor nach Anspruch 8, **dadurch gekennzeichnet, dass** das erste Verbindungsteil (20) und das zweite Verbindungsteil (21) mehrere Haken (30, 39) aufweisen, die bezüglich der Achse (17) des Servomotors winkelmäßig in mindestens einer kreisförmigen Reihe verteilt sind.

10. Servomotor nach einem der vorhergehenden Ansprüche, **dadurch gekennzeichnet, dass** das elastische Mittel (4) eine erste Rückstellfeder (43) und eine zweite Rückstellfeder (44) aufweist, die zwischen dem ersten Verbindungsteil (20) und dem zweiten Verbindungsteil (21) angeordnet sind.

11. Verfahren zum Anbringen eines pneumatischen Servomotors (1) zur Bremsunterstützung nach einem der Ansprüche 1 bis 10 an einem Hauptzylinder (2) eines Fahrzeugs, **dadurch gekennzeichnet, dass** es folgende Schritte umfasst:
- mindestens eine Rückstellfeder (4, 43, 44) wird in mindestens einen Haken (30) eines ersten Verbindungsteils (20) eingesetzt,
- die Rückstellfeder wird mit dem ersten Verbindungsteil in mindestens einen entsprechenden Haken (39) eines zweiten Verbindungsteils (21) eingesetzt,
- das erste Verbindungsteil wird in einen Schacht (19) des pneumatischen Kolbens eingesetzt, und
- das erste Verbindungsteil wird in der vorderen Kammer des Servomotors angeordnet.

12. Verfahren zum Anbringen eines Servomotors nach Anspruch 11, **dadurch gekennzeichnet, dass** eine erste Rückstellfeder (43) und eine zweite Rückstellfeder (44) zwischen das erste Verbindungsteil (20) und das zweite Verbindungsteil (21) eingesetzt werden.
